# EUROPÄISCHE PATENTANMELDUNG

(11) **EP 2 413 131 A2**
(43) Veröffentlichungstag der Anmeldung: **01.02.2012**
(21) Anmeldenummer: 11005795.7
(22) Anmeldetag: 15.07.2011
(51) Int. Cl.: G01N 21/64, G01N 21/76

(54) **Luminometer oder Fluorometer mit einer Injektionseinrichtung**

(30) Priorität: 29.07.2010 DE 202010010821 U
(71) Anmelder: Berthold Technologies GmbH & Co. KG, 75323 Bad Wildbad (DE)
(72) Erfinder: Berthold, Fritz, Dr., 75173 Pforzheim (DE); Reuter, Wilfried, Dr., 75334 Straubenhardt (DE)
(74) Vertreter: Schön, Thilo

(57) **Zusammenfassung**

Es wird ein Luminometer oder Fluorometer beschrieben. Dieses weist eine optischen Achse, welche im Wesentlichen senkrecht auf der Messprobe steht, auf. Der Detektor des Luminometers oder Fluorometers liegt entweder direkt oder über ein optisches Umlenkmittel in der optischen Achse. Zum Zuführen von Reagenzien ist eine einen Injektionskanal aufweisende Injektionseinrichtung (20) vorgesehen, wobei der Injektionskanal einen ersten Abschnitt und einen gegenüber dem ersten Abschnitt in Richtung der Messprobe abgewinkelten zweiten Abschnitt mit einer in Richtung der Messprobe weisenden Austrittsöffnung (24c) aufweist. Um eine hohe Empfindlichkeit und ein breites Anwendungsspektrum erreichen zu können, verläuft der erste Abschnitt des Injektionskanals im Wesentlichen senkrecht zur optischen Achse und es ist wenigstens eine zweite Injektionseinrichtung vorgesehen, welche ebenfalls einen zwei Abschnitte aufweisenden Injektionskanal aufweist, dessen erster Abschnitt im Wesentlichen senkrecht zur optischen Achse verläuft und dessen zweiter Abschnitt gegenüber dem ersten Abschnitt abgewinkelt ist und in eine Austrittsöffnung (24c', 24c") mündet (Fig. 2b).

## Beschreibung

Die Erfindung betrifft ein Luminometer oder Fluorometer mit einer Injektionseinrichtung nach dem Oberbegriff des Anspruchs 1.

Biolumineszenz und Chemilumineszenz, häufig nur Lumineszenz genannt, wird z. B. zum Nachweis bakterieller Kontaminationen in Arznei- und Lebensmitteln, in der molekularbiologischen Forschung oder in der Labordiagnostik in Form von Lumineszenz-Immunoassays angewandt.

Die zum quantitativen Nachweis des Lumineszenzlichtes verwendeten Geräte werden Luminometer genannt. Da die nachzuweisenden Lichtmengen extrem gering sind, ist höchste Empfindlichkeit erforderlich, die in der Regel nur mit Photomultipliern erreicht wird. Dies gilt auch für Fluoreszenzmessungen, die entsprechenden Geräte werden Fluorometer genannt.

Als Probenbehälter kommen entweder einzelne Röhrchen oder, und zwar heute überwiegend, sogenannte Mikroplatten zur Verwendung. Letztere enthalten in Zeilen und Reihen angeordnete Vertiefungen zur Aufnahme der Proben. Die Probenzahl pro Platte kann 96, 384 oder 1.538 betragen.

Eine der wichtigsten Spezifikationen eines Luminometers oder Fluorometers ist die Empfindlichkeit. Diese wird weitgehend bestimmt durch die Eigenschaften des verwendeten Photomultipliers. Zu diesen gehören unter anderen die Fläche der Photokathode, die Quantenausbeute im interessierenden Wellenlängenbereich sowie das Hintergrundrauschen oder Nulleffekt. Die höchste Empfindlichkeit wird durch den Betrieb des Photomultipliers als Photon Counter erzielt. Sodann ist die Effizienz der "Transferoptik" wichtig, von der abhängt, weicher Anteil des von der Probe emittierten Lichtes auf die Photokathode des Multipliers auftrifft.

Ein besonderes Problem bei Lumineszenzmessungen ist der Crosstalk, nämlich die Verfälschung der Messung einer in Messposition befindlichen Probe durch die Einstreuung zusätzlichen Lichtes von anderen, nicht in Messposition befindlichen Proben.

Der Grad der Störung der Messung durch Crosstalk hängt wesentlich von der Kinetik der Lumineszenzreaktion ab. Man unterscheidet zwischen "Flash"- und "Glow"-Lumineszenz. Bei der Flash-Lumineszenz beginnt die Lichtemission praktisch sofort mit der Injektion des die Lichtemission auslösenden sogenannten Starter-Reagenz, erreicht nach typischen 0.3-1,0 Sekunden ihr Maximum und fällt dann über mehrere Sekunden wieder schnell ab. Bei der Glow-Lumineszenz hingegen wird einige Zeit nach der Injektion des Starter-Reagenz ein Plateau mit fast konstanter Lichtemission erreicht, die nur langsam, z. B. nur wenige Prozent in 10 Minuten wieder abfällt.

Bei Flash-Lumineszenz muss das Starter-Reagenz direkt in die in Messposition befindliche Probe injiziert werden. Die jeweils noch nicht gemessenen Proben leuchten noch gar nicht und von den bereits gemessenen geht nur noch ein schwaches Nachleuchten aus.

Anders bei der Glow-Lumineszenz, bei der gemessene Proben noch lange stark nachleuchten und ungemessene ebenfalls schon leuchten, wenn ihnen das Starter-Reagenz schon vor der Messung zugefügt wurde. Daher ist die Gefahr von Crosstalk bei Glow-Lumineszenz höher.

Auch bei Fluoreszenzmessungen ist häufig eine Reagenzinjektion in der Messposition erforderlich, um den Effekt einer Reagenzzugabe auf die Fluoreszenzintensität von Beginn an verfolgen zu können.

Somit muss sich in vielen Anwendungen die Injektionsspitze direkt Ober der Probe befinden und es muss durch konstruktive Maßnahmen sichergestellt werden, dass dabei möglichst wenig Licht auf dem Weg zum Detektor verloren geht. Wichtig sind auch praktische Gesichtspunkte, wie die Minimierung der Kontaminationsgefahr des Gerätes durch die verwendeten Chemikalien, einfache Reinigung und die Herstellkosten.

Bei einem Luminometer gemäß der gattungsbildenden EP 1279949 befindet sich zwischen Probe und Detektor ein sich zum Detektor hin verbreitender Reflektor, der dafür sorgt, dass möglichst viel Licht den Detektor erreicht. Dieser Reflektor wird von einem einen Injektionskanal aufweisenden Injektor durchsto-βen, wobei der Injektionskanal zwei Abschnitte aufweist. Hierbei ist der zweite Abschnitt gegenüber dem ersten Abschnitt abgewinkelt und weist eine zur Messprobe weisende Austrittsöffnung auf.

Beim Luminometer der DE 20 2008 416 208 befindet sich ebenfalls zwischen Probe und Detektor eine Reflektoropfik, hier in Form eines Abschnitts eines innen verspiegelten Rotationsellipsoids. In beiden Fällen wird die Reflektorwand von einer geradlinigen Reagenzzuführung durchstoßen, welche über der Probe in einer Spitze endet. Diese Zuführung kann senkrecht von oben oder leicht geneigt erfolgen. In jedem Falle kann deshalb die Photokathode nicht direkt über der Eintrittsblende positioniert werden. Der Zweck der Reflektoren ist es daher, trotz der dadurch bedingten größeren Entfernung der Photokathode eine hohe Empfindlichkeit zu erreichen.

Als gravierender Nachteil derartiger Reflektoren hat sich aber erwiesen, dass sich in praktisch allen Fällen die Reflektionseigenschaften im Laufe der Zeit mehr oder weniger schnell verschlechtern, insbesondere durch Dämpfe oder Spritzer von Reagenzien. Dadurch wird die Empfindlichkeit des Luminometers im Laufe der Zeit immer geringer, was auch dazu führt, dass zeitlich auseinanderliegende Messungen nicht mehr direkt vergleichbar sind.

Für den Fall der Glow-Lumineszenz ist die Lösung dieses Problems einfach, die Photokathode des Photomultipliers wird direkt oberhalb der Probe positioniert, nur durch eine Eintrittsblende von der Probe getrennt, so dass ein Reflektor gar nicht erforderlich ist.

Anders ist es bei der Flash-Lumineszenz, bei der sich zwischen Probe und Detektor noch eine Injektionsvorrichtung befinden muss, so dass der Detektor weiter entfernt von der Probe positioniert werden muss. Hierdurch wird die Empfindlichkeit zunächst reduziert, was dann wieder durch reflektierende Oberflächen ausgeglichen wird, mit den oben beschriebenen Nachteilen.

Entsprechendes gilt für Fluorometer, bei denen ebenfalls möglichst wenig Licht durch die injektionsvorrichtung absorbiert werden soll.

Aufgabe der Erfindung ist es, ein gattungsgemäßes Luminometer oder Fluorometer dahingehend weiterzubilden, dass die oben beschriebenen Probleme vermieden oder zumindest abgemildert werden und dass es ein großes Anwendungsspektrum bietet.

Diese Aufgabe wird durch ein Luminometer oder Fluorometer mit den Merkmalen des Anspruchs 1 gelöst.

Um bei Luminometern den Detektor, das heißt in der Regel die Photokathode eines Photomulipliers, möglichst nahe an die Probe zu bringen, erfolgt die Reagenzzuführung praktisch horizontal von der Seite her und wird erst unmittelbar über der Probe nach unten hin "umgeknickt". Es sind wenigstens zwei derart ausgestaltete Injektionseinrichtungen vorgesehen, so dass je nach konkreter Ausgestaltung die Möglichkeit besteht, mehr als ein Reagenz in die in der Messposition befindliche Probe zu injizieren und/oder ein Reagenz vor der eigentlichen Messung einer Probe zuzuführen, wobei sich die Probe noch nicht in der Messposition befindet.

Die selbe Anordnung kann auch vorteilhaft für Fluorometer verwendet werden. Hier tritt das Emissionslicht zuerst durch den Injektionsbereich, trifft dann auf eine Linsen- oder Reflektoroptik, durchtritt ein optisches Filter und trifft schließlich direkt oder nach einer weiteren Optik auf den Detektor.

Bevorzugte Ausführungsbeispiele der Erfindung sind in den Unteransprüchen angegeben.

Die Erfindung wird nun anhand von Ausführungsbeispielen mit Bezug auf die Figuren näher erläutert. Hierbei zeigen:
- Figur 1: ein Luminometer mit einer erfindungsgemäßen Injektionseinrichtung in einer Querschnittsdarstellung,
- Figur 2a: eine Mikroplatte und eine Injektionseinrichtung in einer perspektivischen Darstellung,
- Figur 2b: die Injektionseinrichtung aus Figur 2a aus einem anderen Blickwinkel und
- Figur 3: ein kombiniertes Luminometer und Fluorometer in einer der Figur 1 entsprechenden Darstellung.

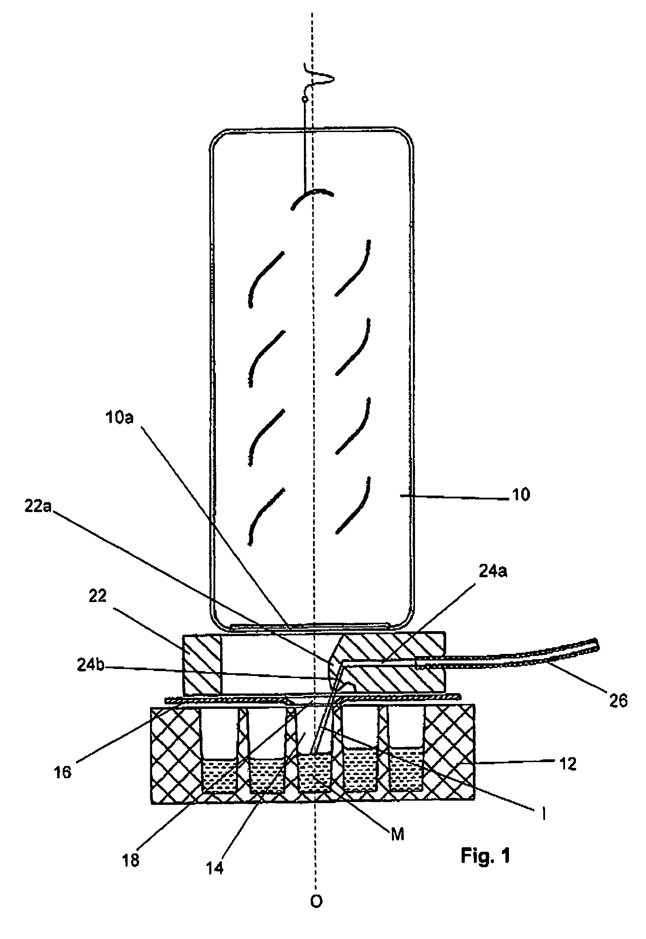

Die Figur 1 zeigt ein Luminometer. Die Messproben M, welche gemessen werden sollen, befinden sich in Vertiefungen 14 einer Mikroplatte 12. Die Längsachse einer Vertiefung 14, an welcher gemessen wird, definiert eine optische Achse O-O, welche senkrecht zur Oberfläche der Mikroplatte 12 steht. In der Regel steht diese optische Achse O-O auch senkrecht zur Oberfläche der in der Regel flüssigen Messprobe M. Oberhalb der zu messenden Messprobe M befindet sich ein Detektor, welcher hier als Photomultiplier 10 ausgebildet ist. Dieser Detektor liegt, wie man der Figur 1 entnehmen kann, in der optischen Achse O-O, d.h. konkret, dass die optische Achse O-O das Eintrittsfenster 10a des Photomultipliers 10 senkrecht schneidet Es wäre auch möglich, dass der Detektor über einen Spiegel, ein Prisma oder ein anderes optisches Umlenkmittel in der optischen Achse O-O liegt.

Unmittelbar über der Mikroplatte 12 befindet sich eine Blende 16 mit einer Blendenöffnung 18, deren unterer Rand in einer Ebene liegt, welche ebenfalls senkrecht zur optischen Achse O-O ist. Die Blende kann z. B. in Form eines vertikal beweglichen Dichtelements mit einer Blendenöffnung gem. EP 1 279 948 ausgeführt sein.

Zwischen der Blende 16 und dem Eintrittsfenster des Photomultipliers 10 befindet sich die Injektionseinrichtung 20, welche im gezeigten Ausführungsbeispiel aus einem ringförmigen Tragekörper 22, zu welchem sich ein Schlauch 26 erstreckt, besteht: Innerhalb des ringförmigen Tragekörpers 22, dessen innerer Durchmesser wesentlich größer als die Blendenöffnung 18 ist, verläuft ein Injektionskanal mit einem ersten Abschnitt 24a und einem zweiten Abschnitt 24b. Der Injektionskanal kann einen Innendurchmesser von z. B. 0,5-0,8 mm haben. Der erste Abschnitt 24a verläuft von der Außenwand des Tragkörpers im Wesentlichen waagrecht, das heißt senkrecht zur optischen Achse O-O und ist bis oberhalb der Probe geführt. Der zweite, relativ kurze Abschnitt 24b, welcher sich an den ersten Abschnitt anschließt, ist gegen den ersten Abschnitt 24a abgewinkelt und weist nach unten. Der zweite Abschnitt läuft am Ende in eine Spitze mit der Austrittsöffnung 24c aus, wobei der zweite Abschnitt 24b in Richtung der Messprobe M zeigt. Die Spitze ist so geformt, dass beim Injizieren keine Flüssigkeit nach außen spritzt und dass bei Beendigung der Injektion der Injektionsstrahl I sauber abreißt. Der Übergang zwischen erstem Abschnitt 24a und zweitem Abschnitt 24b liegt im Bereich einer Ausstülpung 22a des ringförmigen Tragekörpers 22, welcher mit möglichst geringer Wandstärke ausgeführt ist, damit möglichst wenig Licht zwischen Probe und Photokathode absorbiert oder gestreut wird.

Der ringförmige Tragekörper 22 hat außen ein Gewinde, welches zum Anschluss des von einem Injektor kommenden Schlauches 26 mit Hilfe einer Kupplung dient. Das Material des Tragekörpers 22 kann transparent oder undurchsichtig sein und darf keine Wechselwirkung mit den Reagenzien haben, damit weder die Reagenzien noch das Material des Tragekörpers Schaden erleiden. In der durchsichtigen Ausführung ist die Empfindlichkeit etwas höher, allerdings mit der Gefahr von Phosphoreszenzen.

Durch die gewählte Geometrie kann sich das Eintrittsfenster des Detektors sehr nahe an der Messprobe M befinden, so dass nahezu das gesamte aus der Vertiefung 14 austretende Lumineszenzlicht direkt auf das Eintrittsfenster des Detektors auftrifft. Durch diese Anordnung wird erreicht, dass die Photokathode in einem Abstand von nur etwa 10 mm über der Eintrittsblende positioniert werden kann. Damit erreicht man hohe Empfindlichkeiten auch ohne Einsatz von Reflektoren.

Wird keine Injektion in der Messposition benötigt, so kann die Injektionseinrichtung 20 leicht entnommen und der Photomultiplier noch weiter abgesenkt werden, um in diesem Falle maximale Empfindlichkeit bei Lumineszenzmessungen zu erreichen.

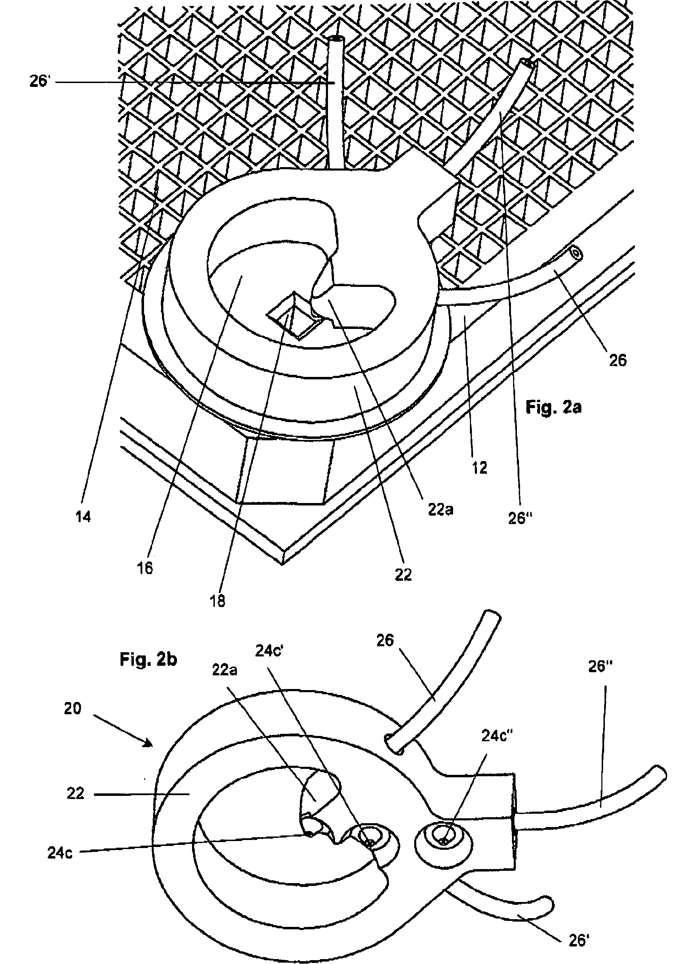

Die Figuren 2a und 2b zeigen eine Injektionseinrichtung 20 in perspektivischer Darstellung. Wie man insbesondere der Figur 2b entnehmen kann, sind mehrere Austrittsöffnungen, nämlich drei Stück 24c, 24c' und 24c" vorhanden, wobei die Zuführung von Injektionsmitteln, welche über Schläuche 26, 26' und 26" zugeführt werden, entsprechend dem oben Erläuterten, nämlich mit Injektionskanälen mit jeweils zwei Abschnitten erfolgt, wobei der erste Abschnitt jeweils im Wesentlichen senkrecht zur optischen Achse verlauft. Beim gezeigten Ausführungsbeispiel der Figuren 2a und 2b liegen die Austrittsöffnungen 24c bis 24c" auf einer Linie und sind somit hintereinander liegenden Vertiefungen 14 zugeordnet, wozu die Blende 16 neben der Blendenöffnung 18 zwei weitere Öffnungen aufweisen muss (nicht dargestellt). Dadurch kann schon vor der eigentlichen Messung ein Reagenz der später zu messenden Probe zugeführt werden.

Die Injektorspitzen werden vorzugsweise so positioniert, dass sie im Falle von Mikroplatten mit 384 Vertiefungen (Näpfchen) mit quadratischem Querschnitt oberhalb einer Diagonale stehen, sei es über dem Näpfchen oder auch außerhalb. Gegebenenfalls erfolgt die Injektion nicht senkrecht nach unten, sondern schräg nach unten in Richtung zur gegenüber liegenden Kante.

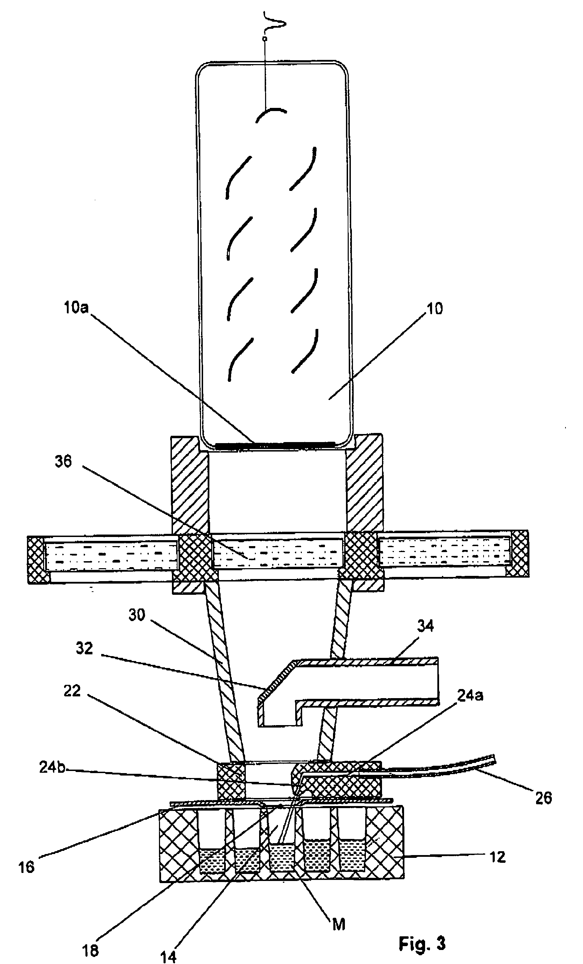

Die Figur 3 zeigt ein kombiniertes Fluorometer und Luminometer in einer der Figur 1 entsprechenden Darstellung. Um Anregungslicht zuführen zu können, ist oberhalb der Injektionseinrichtung 20 ein in einem lichtdichten Rohr 34 angeordneter Spiegel 32 vorgesehen. Dieser liegt innerhalb eines Reflektors 30, welcher das aus der Messprobe M austretende Lumineszenz- oder Fluoreszenzlicht parallel gerichtet bis zu einem Emissionsfilter 36 leitet, welchem der Photomultiplier 10 nachgeordnet ist. Die Geometrie der Injektionseinrichtung 20, welche identisch zur Injektionseinrichtung des ersten Ausführungsbeispiels ist, hat hier den Vorteil, dass der Reflektor 30, welcher beispielsweise innen paraboloidförmig sein kann, bis sehr nahe zur Messprobe geführt werden kann, ohne dass er von einem Teil der Injektionseinrichtung durchstoßen werden muss. Bei abgeschaltetem Anregungslicht funktioniert diese Vorrichtung als Luminometer.

In einer weiteren, nicht in den Figuren dargestellten Ausführungsform werden zwei dünne Schlauchstücke für die Reagenzienzuführung horizontal in die Messkammer geführt. Die Schlauchstücke laufen am Ende in Spitzen aus. Ober der Probe werden die Schlauchstücke nach unten abgeknickt, so dass die Spitzen in die Probenpositionen zeigen, wobei das Abknicken derart erfolgt, dass der Querschnitt im Knickbereich praktisch nicht verringert wird. Die Schlauchstücke werden ebenfalls in einem Tragekörper gehalten, dieser enthält ein Gewinde oder andere Anschlussmöglichkeiten für die von den Injektoren kommenden Schläuche.

### Bezugszeichenliste

- 10: Photomultiplier
- 10a: Eintrittsfenster
- 12: Mikroplatte
- 14: Vertiefung
- 16: Blende
- 18: Blendenöffnung
- 19: weitere Öffnung
- 20: Injektionseinrichtung
- 22: ringförmiger Tragekörper
- 22a: Ausstülpung
- 24a: erster Abschnitt
- 24b: zweiter Abschnitt
- 24c: Austrittsöffnung
- 26: Schlauch
- 30: Reflektor
- 32: Spiegel
- 34: lichtdichtes Rohr
- 36: Emissionsfilter
- O-O: optische Achse
- M: Messprobe
- I: Injektionsstrahl

## Patentansprüche

1. Luminometer oder Fluorometer mit:
- einer optischen Achse (O-O), welche im Wesentlichen senkrecht auf der Messprobe (M) steht,
- einem Detektor, welcher entweder direkt oder über ein optisches Umlenkmittel in der optischen Achse (0-0) liegt,
- einer einen Injektionskanal aufweisenden Injektionseinrichtung (20), wobei der Injektionskanal einen ersten Abschnitt (24a) und einen gegenüber dem ersten Abschnitt in Richtung der Messprobe abgewinkelten zweiten Abschnitt (24b) mit einer in Richtung der Messprobe (M) weisenden Austrittsöffnung (24c) aufweist,
**dadurch gekennzeichnet, dass** der erste Abschnitt (24a) des Injektionkanals im Wesentlichen senkrecht zur optischen Achse (O-O) verläuft und dass wenigstens eine zweite Injektionseinrichtung vorgesehen ist, welche ebenfalls einen zwei Abschnitte aufweisenden Injektionskanal aufweist, dessen erster Abschnitt im Wesentlichen senkrecht zur optischen Achse (O-O) verläuft und dessen zweiter Abschnitt gegenüber dem ersten Abschnitt abgewinkelt ist und in eine Austrittsöffnung (24c', 24c") mündet.

2. Luminometer oder Fluorometer nach Anspruch 1, **dadurch gekennzeichnet, dass** der erste Abschnitt (24a) praktisch horizontal verläuft.

3. Luminometer oder Fluorometer nach einem der vorangehenden Ansprüche, **dadurch gekennzeichnet, dass** es eine wenigstens eine Blendenöffnung (18) aufweisende Blende (16) aufweist, deren vom Detektor weg weisender unterer Rand eine erste Ebene definiert, welche senkrecht zur optischen Achse (O-O) verläuft.

4. Luminometer oder Fluorometer nach Anspruch 3, **dadurch gekennzeichnet, dass** der Abstand zwischen der ersten Ebene und dem ersten Abschnitt des Injektionskanals maximal 10 mm beträgt.

5. Luminometer oder Fluorometer nach Anspruch 3, **dadurch gekennzeichnet, dass** die Blende zusätzlich zur Blendenöffnung eine weitere Öffnung aufweist, wobei die Austrittsöffnung der zweiten Injektionseinrichtung zur weiteren Öffnung weist.

6. Luminometer oder Fluorometer nach Anspruch 5, **dadurch gekennzeichnet, dass** drei Injektionseinrichtungen mit hintereinander angeordneten Austrittsöffnungen (24c, 24c', 24c") vorhanden sind.

7. Luminometer oder Fluorometer nach einem der vorangehenden Ansprüche, **dadurch gekennzeichnet, dass** sich zumindest der erste Abschnitt (24a) des Injektionskanals durch einen Tragekörper (22) erstreckt.

8. Luminometer nach Anspruch 7, **dadurch gekennzeichnet, dass** sich der erste Abschnitt (24a) von der Außenwand des Tragkörpers waagrecht in diesen hinein erstreckt.

9. Luminometer oder Fluorometer nach Anspruch 7 oder Anspruch 8, **dadurch gekennzeichnet, dass** zumindest der erste Abschnitt des Injektionskanals eine Bohrung im Tragekörper ist.

10. Luminometer oder Fluorometer nach Anspruch 9, **dadurch gekennzeichnet, dass** sich vom Tragekörper eine Ausstülpung (22a) erstreckt, in welcher sich der Übergang vom ersten zum zweiten Abschnitt des Injektionskanals befindet.

11. Luminometer oder Fluorometer nach Anspruch 3 und einem der Ansprüche 7 bis 10, **dadurch gekennzeichnet, dass** der Tragekörper ringförmig ausgebildet ist und die Blendenöffnung umläuft.

12. Luminometer oder Fluorometer nach Anspruch 11, **dadurch gekennzeichnet, dass** der Tragekörper die Blende und den Detektor lichtdicht verbindet.

13. Luminometer oder Fluorometer nach einem der Ansprüche 1 bis 6, **dadurch gekennzeichnet, dass** der Injektionskanal in einem abgeknickten Schlauch oder einem abgeknickten Röhrchen verläuft.

14. Luminometer oder Fluorometer nach einem der vorangehenden Ansprüche, **dadurch gekennzeichnet, dass** der Winkel zwischen dem ersten und dem zweiten Abschnitt des Injektionskanals zwischen 90° und 135° beträgt.

15. Luminometer oder Fluorometer nach einem der vorangehenden Ansprüche, **dadurch gekennzeichnet, dass** oberhalb der Injektionseinrichtung über einen Spiegel (32), welcher gegenüber der optischen Achse um 45° geneigt ist, Anregungslicht auf die Messprobe gelenkt werden kann und dass aus der Messprobe emittierte Licht Ober einen parabolförmigen Reflektor (30) oberhalb der Injektionseinrichtung parallelisiert werden kann.
